# FASCICULE DE BREVET EUROPEEN

(11) **EP 0 656 497 B1**
(45) Date de publication et mention de la délivrance du brevet: **25.03.1998**
(21) Numéro de dépôt: 94402519.6
(22) Date de dépôt: 08.11.1994
(51) Int. Cl.: F16K 31/143, F16K 17/38

(54) **Dispositif de sécurité d'une vanne rotative**
Sicherheitseinrichtung für ein Drehventil
Safety device for a rotary valve

(30) Priorité: 19.11.1993 FR 9313819
(43) Date de publication de la demande: 07.06.1995
(73) Titulaire: PYROALLIANCE, 78130 Les Mureaux (FR)
(72) Inventeur: Borg, Evrard, F-83110 Sanary (FR); Gouallec, Jean-Pierre, F-83100 Toulon (FR); Medail, Jean, F-83200 Toulon (FR)
(74) Mandataire: Pech, Bernard

(56) Documents cités:
- EP-A- 0 118 230
- FR-A- 1 265 365
- FR-A- 2 211 101
- FR-A- 2 241 737
- FR-A- 2 450 398
- FR-A- 2 520 473
- US-A- 3 217 604

## Description

La présente invention se rapporte au domaine des dispositifs de manoeuvre des vannes. Plus précisément l'invention concerne un dispositif de sécurité permettant en cas d'accident d'ouvrir ou de fermer une vanne qui est normalement commandée par un arbre rotatif moteur actionné par un volant manuel ou par un moteur.

Les vannes utilisées sur les sites industriels ou portuaires sont très souvent des vannes rotatives du type vanne "papillon" ou vanne "à boisseau". Ces vannes possèdent toutes un arbre de commande couplé à un arbre rotatif moteur actionné lui-même par un dispositif moteur qui peut être un moteur électrique, hydraulique, pneumatique ou un volant manuel.

Un souci constant sur de tels sites est de pouvoir ouvrir ou fermer ces vannes rapidement en toutes circonstances et notamment en cas d'accident grave ou d'incendie.

Afin d'augmenter la fiabilité de fonctionnement de ces vannes, le dispositif moteur qui entraîne l'arbre rotatif moteur est souvent doublé. Ainsi les brevets FR-A-2 241 737 et FR-A-2 450 398 qui correspondent aux brevets US-A- 3 838 609 et US-A-4 285 493 décrivent de telles vannes pour lesquelles l'arbre moteur peut être entraîné par un moteur traditionnel ou par un volant manuel.

Ces installations garantissent une bonne fiabilité de fonctionnement en temps normal mais ne garantissent pas la possibilité d'ouvrir ou de fermer la vanne lorsque les infrastructures lourdes du site, telles que les circuits d'alimentation électrique, hydraulique ou pneumatique, sont endommagées et que les circonstances, par exemple l'incendie, rendent impossible l'accès à la vanne pour une personne physique.

Pour remédier à cet inconvénient, il a été proposé, par exemple par le brevet FR-A-2 211 101, un dispositif de sécurité agissant directement sur l'arbre de commande de la vanne. Ce dispositif est constitué par un vérin actionné par les gaz provenant d'un générateur pyrotechnique de gaz dont la commande est indépendante des infrastructures lourdes du site. Cette solution offre une très grande sécurité de fonctionnement en toutes circonstances, mais présente pour l'industriel l'inconvénient suivant : les dispositifs moteurs généralement utilisés pour commander des vannes sont très démultipliés et sont donc irréversibles. L'homme de métier qui veut utiliser un dispositif de sécurité tel que décrit dans le brevet FR-A-2 211 101 ne peut donc pas envisager d'utiliser, en temps normal, un dispositif moteur traditionnel pour actionner sa vanne et se voit ainsi contraint d'utiliser exclusivement le dispositif de sécurité pour toute ouverture ou fermeture de sa vanne, même en fonctionnement normal.

Il a alors été proposé, comme décrit dans le brevet FR-A-2 520 473 ou dans son correspondant américain US-A-4 691 893, un dispositif de sécurité qui peut prendre le relai d'un dispositif moteur traditionnel grâce à un désacouplement entre l'arbre de commande de la vanne et le dispositif moteur. Ce brevet décrit une vanne "à guillotine" actionnée par un système pneumatique doublé d'un volant manuel. En cas d'élévation de la température à proximité de la vanne, la fusion d'un élément métallique de jonction déconnecte le dispositif moteur et la vanne se referme grâce à des ressorts de rappel agissant sur l'obturateur de la vanne. Un tel système de sécurité permet bien l'emploi d'un dispositif moteur en temps normal mais n'est pas efficace dans toutes les configurations d'accident ou d'incendie puisqu'il ne se déclanche que s'il y a élévation forte de température à proximité de la vanne.

L'homme de métier ne dispose donc pas à l'heure actuelle d'un dispositif de sécurité pour manoeuvrer une vanne qui, à la fois, permette l'emploi en temps normal d'un dispositif moteur traditionnel et qui soit immédiatement efficace dans tous les cas d'accident ou d'incendie.

L'objet de la présente invention est précisément de proposer un tel dispositif.

L'invention concerne donc un dispositif de manoeuvre d'une vanne à obturateur rotatif possédant un arbre de commande actionné par un arbre rotatif moteur disposé dans le prolongement du dit arbre de commande et solidaire de ce dernier par un système de liaison, le dit dispositif étant caractérisé en ce que :
**1)** le dit système de liaison comporte une enceinte creuse indépendante de l'un au moins des dits arbres, la dite enceinte étant munie de deux canalisations et contenant une pièce mobile pouvant se déplacer entre une position initiale dans laquelle elle est solidaire à la fois du dit arbre de commande et du dit arbre moteur et où elle constitue une barrière étanche entre les deux canalisations, et une position finale dans laquelle elle n'est plus solidaire que d'un seul au plus des dits arbres et où elle libère une voie de communication entre les deux canalisations,
**2)** une source de fluide est reliée à l'une des dites canalisations,
**3)** l'autre canalisation est reliée à un piston susceptible d'actionner directement l'arbre de commande de la dite vanne.

Le déplacement de la dite pièce mobile peut être obtenu par divers moyens comme, par exemple, sous l'effet des gaz provenant d'une cartouche pyrotechnique ou d'un rétracteur pyrotechnique.

Toutefois selon une première réalisation préférée de l'invention la canalisation reliée à la source de fluide est disposée de manière à ce que le déplacement de la dite pièce mobile soit obtenu par l'action du dit fluide qui assure ainsi, dans un premier temps, le désacouplement de l'arbre moteur et de l'arbre de commande de la vanne et qui, dans un deuxième temps, assure, par l'intermédiaire du piston relié à l'autre canalisation la manoeuvre de l'arbre de commande de la vanne.

Le dit fluide peut être un liquide comme l'huile mais, selon une seconde réalisation préférée de l'invention le dit fluide est un gaz sous pression dont la source est un réservoir de gaz sous pression muni d'un robinet qui peut être un robinet pyrotechnique, un robinet à commande électrique ou encore un robinet à percussion.

Selon une troisième réalisation préférée de l'invention la dite source de gaz est un générateur pyrotechnique de gaz muni d'un initiateur qui peut être un initiateur électrique ou un initiateur à percussion.

Selon une quatrième réalisation préférée de l'invention la dite enceinte creuse est fixée à l'arbre de commande de la vanne et le dit piston agit sur ce dernier par l'intermédiaire d'une crémaillère qui engrène dans un secteur denté porté par la dite enceinte creuse.

Un dispositif de sécurité selon l'invention peut ainsi être monté sur les vannes traditionnelles possédant un obturateur dont le déplacement en rotation est commandé par un arbre entrainé par un arbre moteur distinct. En fonctionnement normal c'est le dispositif moteur traditionnel qui assurera, en fonction des besoins, l'ouverture ou la fermeture de la vanne.

En cas d'incident de fonctionnement, la manoeuvre de la vanne pourra être obtenue par le dispositif de sécurité selon l'invention. Le déclenchement de la source de fluide ou de la cartouche pyrotechnique provoquera le déplacement de la pièce mobile entre sa position dite initiale et sa position dite finale et, ce faisant, le désacouplement des deux arbres. Les deux orifices de l'enceinte étant alors mis en communication l'un avec l'autre, le fluide pourra actionner le piston qui agit sur l'arbre de commande de la vanne.

Le dispositif selon l'invention offre ainsi une sécurité totale de fonctionnement dans toutes les configurations d'accidents et d'incendie tout en permettant l'emploi, en temps normal, du dispositif moteur d'origine de la vanne.

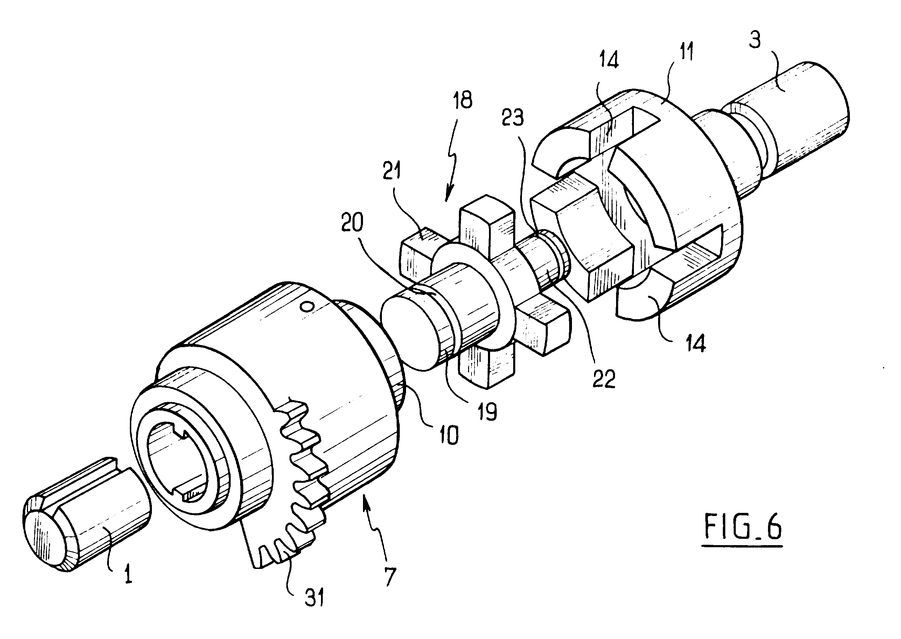

L'invention est maintenant décrite en détails dans sa réalisation préférentielle en se référant aux figures 1 à 6.
La figure 1 est une vue de face en coupe partielle d'un dispositif selon l'invention, dans lequel la pièce mobile est en position initiale,
La figure 2 est une vue de dessus, en coupe selon le plan AA, du même dispositif.
La figure 3 est une vue de face partielle, en coupe, du système de liaison dans lequel la pièce mobile est en position finale.
La figure 4 est une vue en perspective arrachée du système de liaison dans lequel la pièce mobile est en position initiale,
La figure 5 est une vue en perspective arrachée du système de liaison dans lequel la pièce mobile est en position finale,
La figure 6 est une vue en perspective éclatée du système de liaison.

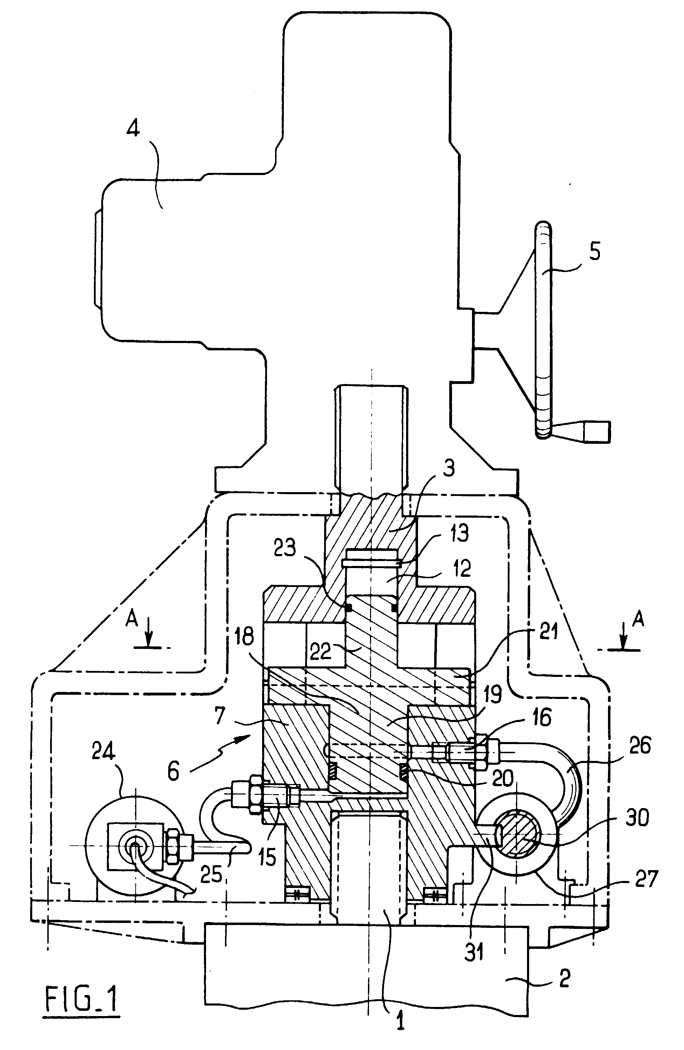

L'invention concerne donc un dispositif de sécurité pour la manoeuvre d'une vanne à obturateur rotatif, du type vanne à boisseau ou vanne "quart-de-tour". On a représenté à la figure 1 un tel dispositif monté sur l'arbre de commande 1 d'une vanne "quart-de-tour" 2 simplement esquissée sur la figure 1. L'arbre de commande 1 de la vanne est actionné par un arbre rotatif moteur 3 qui est diposé dans le prolongement de l'arbre de commande 1 de la vanne 2 et qui est entraîné par un bloc moteur 4 doublé d'une commande manuelle 5 à volant.

L'arbre de commande 1 de la vanne est solidaire de l'arbre moteur 3 grâce à un système de liaison 6.

Le système de liaison 6 comporte une enceinte creuse 7 indépendante de l'un au moins des dits arbres 1 et 3. Dans la réalisation qui est représentée sur les figures, l'enceinte creuse 7 est une pièce cylindrique qui comporte un logement cylindrique borgne inférieur 8 claveté et par lequel l'enceinte 7 est bloquée sur la tête de l'arbre de commande 1.

L'enceinte 7 comporte également un logement cylindrique borgne supérieur 9 terminé par des éléments de couronnes circulaires 10 non jointifs. Ces éléments de couronnes circulaires 10 non jointifs sont au nombre de quatre et ont une épaisseur inférieure à l'épaisseur de la paroi cylindrique de l'enceinte 7 délimitant le logement borgne 9.

L'arbre moteur 3 se termine par une partie large 11 en forme de disque. Un logement cylindrique borgne 12 est ménagé à l'extrêmité de l'arbre 3. Ce logement comporte une gorge 13 circulaire comme représenté à la figure 1.

L'extrêmité élargie 11 de l'arbre 3 se prolonge par des éléments de couronnes circulaires non jointifs 14. Ces éléments 14 sont au nombre de quatre et viennent en regard des éléments 10 portés par l'enceinte 7 ; ils ont la même épaisseur que ces derniers, mais ne sont pas en appui sur eux.

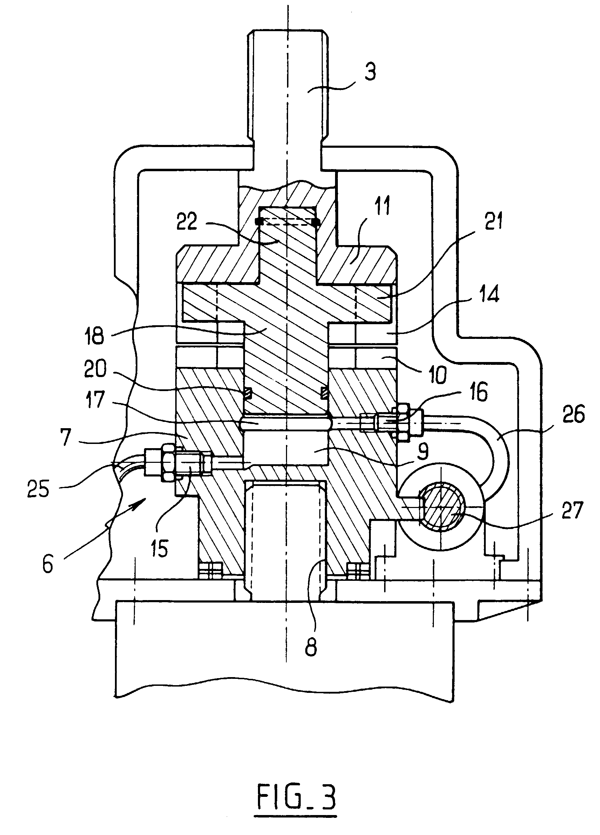

La dite enceinte 7 est munie de deux canalisations 15 et 16 perpendiculaires à l'axe de l'enceinte et qui relient chacune le logement supérieur borgne 9 à l'extérieur de l'enceinte 7. Comme représenté sur les figures 1 et 3 les canalisations 15 et 16 ne sont pas situées dans un même plan perpendiculaires à l'axe de l'enceinte mais dans deux plans distincts. La canalisation 15 est située dans un plan qui la fait déboucher dans le fond du logement borgne 9 et la canalisation 16 est située dans un plan qui la fait déboucher dans un chambrage 17 situé entre le fond du logement borgne 9 et les secteurs de couronnes circulaires 10.

De manière caractéristique la dite enceinte 7 contient une pièce mobile 18 qui peut se déplacer entre une position initiale dans laquelle est elle solidaire à la fois du dit arbre de commande 1 et du dit arbre moteur 3 et où elle constitue une barrière étanche entre les deux canalisations 15 et 16, et une position finale dans laquelle elle n'est plus solidaire que d'un seul au plus des dits arbres 1 ou 3 et dans laquelle elle libère une voie de communication entre les canalisation 15 et 16. Dans la réalisation représenté sur les figures, la pièce mobile 18 est une pièce cylindrique comportant trois parties distinctes de diamètres différents. La pièce 18 comprend une partie inférieure 19 destinée à se loger et à coulisser dans le logement borgne 9 de l'enceinte 7. Le diamètre de cette partie 19 est égal au diamètre intérieur du logement 9 et sa hauteur est égale à celle du logement 9. Un joint circulaire d'étanchéïté 20 est porté par cette partie inférieure 19 de la pièce 18. La pièce mobile 18 comprend également une partie médiane constituée par quatre bras 21 identiques et susceptibles de s'encastrer entre les éléments de couronnes circulaires 10 portés par l'enceinte 7 et les éléments de couronnes circulaires 14 portés par l'arbre moteur 3. Ces bras 21 ont une hauteur supérieure à la hauteur des éléments de couronnes circulaires 10 portés par l'enceinte 7.

Enfin la pièce mobile 18 comporte une partie supérieure 22 destinée à se loger et à coulisser dans le logement borgne 12 de l'arbre 3. Le diamètre de cette partie 22 est égal au diamètre intérieur du logement 12. Cette partie supérieure 22 porte un joint dilatable 23.

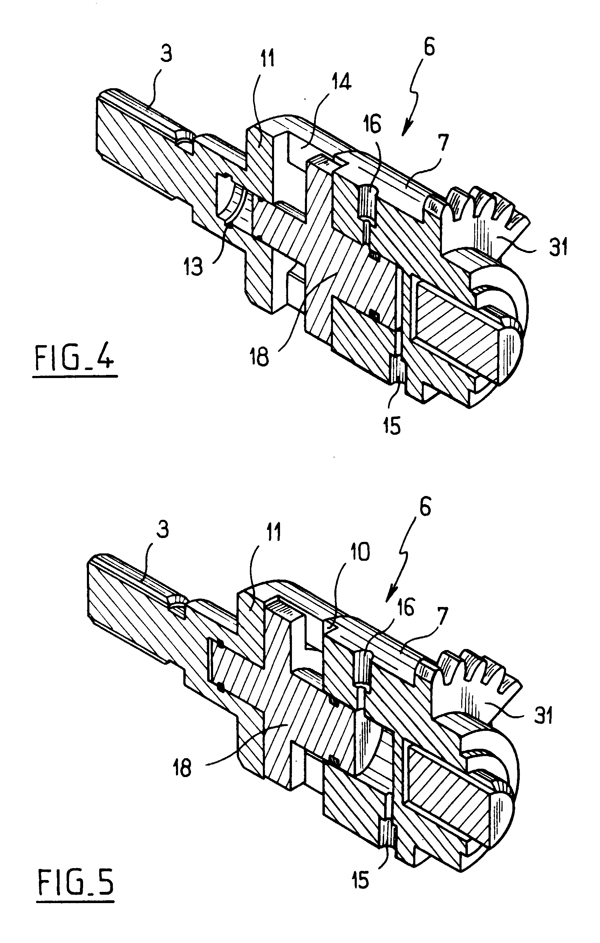

Lorsque la pièce mobile 18 est placée dans l'enceinte 7 en position dite initiale comme représenté aux figures 1 et 4, sa partie inférieure 19 occupe tout le logement borgne 9 de l'enceinte 7, le joint d'étanchéïté 20 étant disposé entre la canalisation 15 et la canalisation 16. Une barrière étanche existe donc bien dans cette position entre les deux canalisations. Les bras 21 de la partie médiane reposent alors sur l'enceinte 7 encastrés à la fois entre les éléments 10 portés par l'enceinte 7 et les éléments 14 portés par l'arbre 3. Ainsi, dans cette position l'arbre moteur 3 est solidaire de l'arbre de commande 1 de la vanne. Toute rotation de l'arbre 3 entraine une rotation des éléments 14 qui, par l'intermédiaire des éléments 10, provoquent la rotation de l'enceinte 7 qui entraine la rotation de l'arbre de commande 1 de la vanne 2. Enfin, dans cette position, l'extrêmité supérieure de la partie 22 de la pièce mobile 18 est engagée dans le logement borgne 12 porté par l'arbre 3 sur une hauteur suffisante pour que le joint dilatable 23 soit engagé dans le logement 12. Dans cette position la hauteur de la partie libre du logement 12 doit répondre à une double condition :
**a)** elle doit être supérieure à la fois à la hauteur des éléments de couronnes circulaires 10 portés par l'enceinte 7 et à la hauteur existant entre le fond du logement borgne 9 porté par l'enceinte 7 et la canalisation 16,
**b)** elle doit être inférieure à la hauteur existant entre le joint d'étanchéïté 20 porté par la partie inférieure 19 de la pièce mobile 18 et l'extrêmité libre du logement borgne 9 porté par l'enceinte 7.

Dans ces conditions lorsque la pièce mobile 18 est déplacée pour atteindre sa position dite finale comme représenté aux figures 3 et 5, la partie supérieure 22 de la pièce mobile 18 occupe tout le logement borgne 12 porté par l'arbre moteur 3 et les bras 21 sont encastrés entre les seuls éléments de couronnes circulaires 14 portés par l'arbre moteur 3. Ce dernier ne peut plus entrainer en rotation l'enceinte 7 et l'arbre de commande 1 de la vanne 2 et réciproquement une rotation imprimée à l'enceinte 7 n'est pas contrariée par l'inertie des systèmes moteurs 4 et 5.

Dans cette position la partie inférieure 19 de la pièce mobile 18 comportant le joint d'étanchéïté 20 se trouve encore dans le logement borgne 9 de l'enceinte 7, mais au dessus de la canalisation 16, une voie de communication, sans fuite possible vers l'extérieur, a donc été ouverte entre les canalisations 15 et 16.

Enfin, pour assurer un bon maintien de la pièce mobile 18 dans sa position dite finale, on disposera le joint dilatable 23 de manière à ce qu'il puisse s'insérer dans la gorge 13 du logement 12 comme représenté à la figure 3.

Afin de faciliter le déplacement de la pièce mobile 18 on prévoiera avantageusement dans le fond du logement borgne 12 porté par l'arbre 3 un orifice d'échappement de l'air. Cet orifice n'a pas été représenté sur les figures.

Une source 24 de gaz sous pression est reliée par l'intermédiaire d'une conduite 25 à l'une des dites canalisations et l'autre canalisation est reliée par une conduite 26 à un piston 27 susceptible d'actionner directement l'arbre de commande 1 de la vanne 2.

Lorsque la pièce mobile 18 est en position dite initiale les deux canalisations sont séparées par une barrière étanche comme il a été expliqué plus haut et la manoeuvre de la vanne s'effectue par le bloc moteur 4 ou par la commande manuelle 5.

En cas d'accident grave empêchant à la fois le fonctionnement du bloc moteur et celui de la commande manuelle 5, on provoque le déplacement de la pièce mobile 18 et on utilise le gaz sous pression pour actionner l'arbre de commande de la vanne. A la place d'un gaz sous pression on peut également utiliser un liquide comme, par exemple, une huile.

Le déplacement de la pièce mobile 18 peut être provoqué de diverses manières, par exemple par un rétracteur pyrotechnique ou par une simple cartouche pyrotechnique. Mais la solution préférée par la demanderesse est celle représentée sur les figures 1 à 3 qui consiste à relier la source de gaz sous pression 24 à la canalisation 15 et le piston 27 à la canalisation 16. Dans ces conditions, en cas d'accident nécessitant la mise en oeuvre du dispositif de sécurité selon l'invention, on commande à distance l'arrivée du gaz sous pression qui entre dans le logement 9 par la canalisation 15 et provoque le déplacement de la pièce mobile 18 de sa position initiale vers sa position finale, puis, par la canalisation 16 et la conduite 26 provoque le fonctionnement du piston 27. Dans le cas où un rétracteur pyrotechnique ou une cartouche pyrotechnique sont utilisés pour déplacer la pièce mobile, la source de gaz sous pression peut être directement raccordée au piston 27.

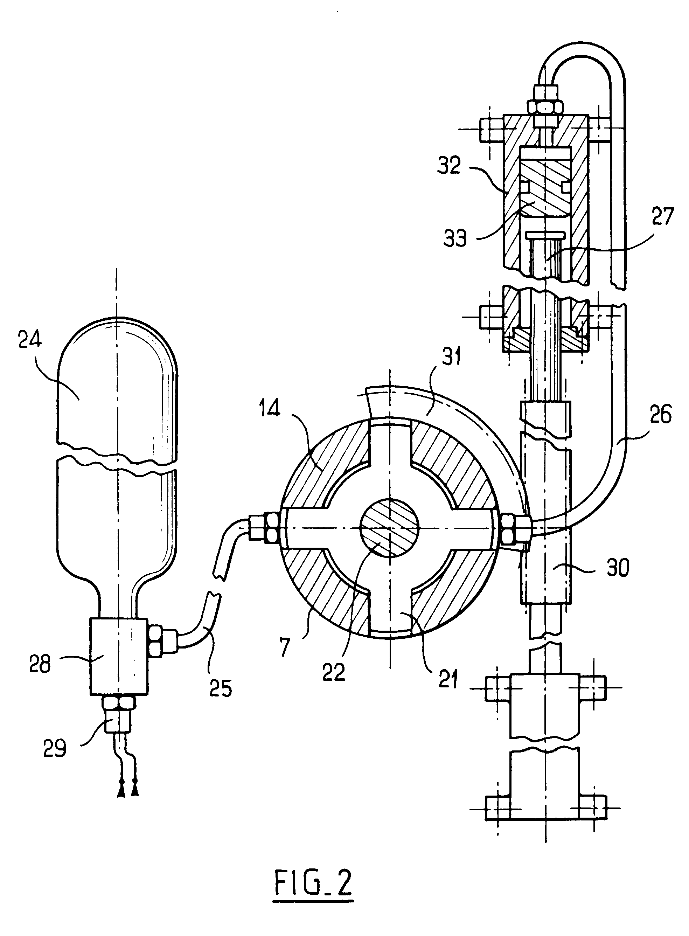

La source 24 de gaz sous pression peut être, comme représente sur la figure 2 un réservoir de gaz sous pression muni d'un robinet 28. Avantageusement le robinet 28 sera un robinet pyrotechnique à commande électrique, fonctionnant sur un circuit de secours indépendant des installations électriques principales du site. Il peut s'agir, par exemple, d'une commande électrique fonctionnant sur piles et commandée par une télécommande. Le robinet pyrotechnique peut aussi, selon les cas, être actionnée par un percuteur situé dans une salle de contrôle ou commandé sur le site par un ressort et par un élément thermofusible.

La source de gaz sous pression 24 peut aussi être constituée par un générateur pyrotechnique de gaz muni d'un initiateur à commande électrique ou à commande par percussion.

On a représenté à la figure 2 une réalisation préférée de manoeuvre de l'arbre de commande 1 de la vanne 2 par le gaz sous pression. Le gaz arrivant par la canalisation 16 et la conduite 26 pénètre dans une enceinte tubulaire étanche 32 où, par l'intermédiaire d'un poussoir 33, il pousse un piston 27 qui se prolonge, au delà de l'enceinte tubulaire 32, par une crémaillière 30 qui engrène dans un secteur circulaire denté 31 porté par l'enceinte creuse 7 fixé à l'arbre de commande 1. L'avance de la crémaillière 30 provoque la rotation de l'enceinte 7 qui entraîne l'arbre de commande.

## Revendications

1. Dispositif de manoeuvre d'une vanne (2) à obturateur rotatif possédant un arbre de commande (1) actionné par un arbre rotatif moteur (3) disposé dans le prolongement du dit arbre de commande (1) et solidaire de ce dernier par un système de liaison (6) caractérisé en ce que :
1) le dit système de liaison (6) comporte une enceinte creuse (7) indépendante de l'un au moins des dits arbres (1,3), la dite enceinte étant munie de deux canalisations (15,16) et contenant une pièce mobile (18) qui peut se déplacer entre d'une part une position initiale dans laquelle elle est solidaire à la fois du dit arbre de commande (1) et du dit arbre moteur (3) et où elle constitue une barrière étanche entre les deux canalisations (15,16), et d'autre part une position finale dans laquelle la dite pièce mobile (18) n'est plus solidaire que d'un seul au plus des arbres (1,3) et où elle libère une voie de communication entre les deux canalisations (15,16),
2) une source de fluide (24) est reliée à l'une des dites canalisations (15),
3) l'autre canalisation (16) est relié à un piston (27) susceptible d'actionner l'arbre de commande (1) de la dite vanne (2).

2. Dispositif selon la revendication 1 caractérisé en ce que le déplacement de la dite pièce mobile (18) est obtenu par une cartouche pyrotechnique, ou un rétracteur pyrotechnique.

3. Dispositif selon la revendication 1 caractérisé en ce que la canalisation (15) reliée à la source (24) de fluide est disposée de manière à ce que le déplacement de la dite pièce mobile (18) est obtenu par le dit fluide.

4. Dispositif selon la revendication 1 caractérisé en ce que le dit fluide est un gaz sous pression.

5. Dispositif selon la revendication 4 caractérisé en ce que la dite source de gaz (24) est un réservoir muni d'un robinet (28).

6. Dispositif selon la revendication 4 caractérisé en ce que la dite source de gaz (24) est un générateur pyrotechnique de gaz muni d'un initiateur.

7. Dispositif selon la revendication 3 caractérisé en ce que la dite enceinte (7) est fixée à l'arbre de commande (1) de la vanne (2) et en ce que le dit piston (27) agit sur l'arbre de commande (1) de la vanne (2) par l'intermédiaire d'une crémaillère (30) qui engrène dans un secteur denté (31) porté par la dite enceinte creuse (7).

8. Dispositif selon la revendication 7 caractérisé en ce que la dite enceinte creuse (7) comprend un logement cylindrique borgne (9) et est terminé par des éléments de couronnes circulaires (10) non jointifs.

9. Dispositif selon la revendication 8 caractérisé en ce que le dit arbre moteur (3) est terminé par un logement cylindrique borgne (12) et par des éléments de couronnes circulaires (14) non jointifs prolongeant les éléments (10) portés par la dite enceinte (7).

10. Dispositif selon la revendication 9 caractérisé en ce que la dite pièce mobile (18) comprend une partie inférieure cylindrique (19) susceptible de coulisser dans le logement borgne (9) porté par la dite enceinte (7), une partie médiane constituée par des bras (21) susceptibles de s'encastrer entre les éléments de couronnes circulaires (10) portés par la dite enceinte (7) et les éléments de couronnes circulaires (14) portés par l'arbre moteur (3), et une partie supérieure cylindrique (22) susceptible de coulisser dans le logement borgne (12) porté par l'arbre moteur (3).

## Patentansprüche

1. Betätigungsvorrichtung für ein Ventil (2) mit Drehschieber, mit einer Steuerwelle (1), die durch eine drehbare Antriebswelle (3) betätigt wird, die in der Verlängerung der genannten Steuerwelle (1) angeordnet und mit dieser letztgenannten durch ein Verbindungssystem (6) fest verbunden ist, dadurch gekennzeichnet, daß
1) das genannte Verbindungssysten (6) eine hohle Umhüllung (7) aufweist, die von mindestens einer der genannten Wellen (1, 3) unabhängig ist, wobei die genannte Umhüllung mit zwei Leitungen (15, 16) versehen ist und ein bewegliches Teil (18) aufweist, das sich zwischen einerseits einer Anfangslage, in welcher es gleichzeitig mit der genannten Steuerwelle (1) und der genannten Antriebswelle (3) verbunden ist und in der es eine dichte Sperre zwischen den beiden Leitungen (15, 16) bildet, und andererseits einer Endlage bewegen kann, in welcher das genannte bewegliche Teil (18) nur noch mit höchstens einer der Wellen (1, 3) fest verbunden ist und in welcher es einen Verbindungsweg zwischen den beiden Leitungen (15, 16) herstellt,
2) eine Strömungsmittelquelle (24) an eine der genannten Leitungen (15) angeschlossen ist, und
3) die andere Leitung (16) mit einem Kolben (27) verbunden ist, der in der Lage ist, die Steuerwelle (1) des genannten Ventils (2) zu betätigen.

2. Vorrichtung nach Anspruch 1, dadurch gekennzeichnet, daß die Bewegung des genannten beweglichen Teils (18) durch eine pyrotechnische Patrone oder durch eine pyrotechnische Einzugseinrichtung erhalten wird.

3. Vorrichtung nach Anspruch 1, dadurch gekennzeichnet, daß die Leitung (15), die mit der Strömungsmittelquelle (24) verbunden ist, derart angeordnet ist, daß die Bewegung des genannten beweglichen Teils (18) durch das genannte Strömungsmittel erzielt wird.

4. Vorrichtung nach Anspruch 1, dadurch gekennzeichnet, daß das genannte Strömungsmittel ein unter Druck stehendes Gas ist.

5. Vorrichtung nach Anspruch 4, dadurch gekennzeichnet, daß die genannte Gasquelle (24) ein mit einem Absperrventil (28) versehener Vorratsbehälter ist.

6. Vorrichtung nach Anspruch 4, dadurch gekennzeichnet, daß die genannte Gasquelle (24) ein pyrotechnischer Gasgenerator ist, der mit einer Auslöseeinrichtung versehen ist.

7. Vorrichtung nach Anspruch 3, dadurch gekennzeichnet, daß die genannte Umhüllung (7) an der Steuerwelle (1) des Ventils (2) befestigt ist, und daß der genannte Kolben (27) auf die Steuerwelle (1) des Ventils (2) mittels einer Zahnstange (30) einwirkt, die in einen Zahnsektor (31) eingreift, der von der genannten hohlen Umhüllung (7) getragen ist.

8. Vorrichtung nach Anspruch 7, dadurch gekennzeichnet, daß die genannte hohle Umhüllung (7) einen blinden Zylindersitz (9) aufweist und von nicht nebeneinanderliegenden Kreisringflächenelementen (10) beendet ist.

9. Vorrichtung nach Anspruch 8, dadurch gekennzeichnet, daß die genannte Antriebswelle (3) durch einen blinden Zylindersitz (12) beendet ist, sowie durch nicht aneinander angrenzende Kreisringflächenelemente (14), in Verlängerung der Elemente (10), die von der genannten Umhüllung (3) getragen sind.

10. Vorrichtung nach Anspruch 9, dadurch gekennzeichnet, daß das genannte, bewegliche Teil (18) einen inneren, zylindrischen Abschnitt (19) aufweist, der imstande ist, im blinden Sitz (9) zu gleiten, der von der genannten Umhüllung (7) getragen ist, einen mittleren Abschnitt, der von Armen (21) gebildet ist, die imstande sind, zwischen den Kreisringflächenelementen (10), die von der genannten Umhüllung (7) getragen sind, und den Kreisringflächenelementen (14), die von der Antriebswelle (3) getragen sind, einzufallen, sowie einen zylindrischen, oberen Abschnitt (22), der imstande ist, im blinden Sitz (12) zu gleiten, der von der Antriebswelle (3) getragen ist.

## Claims

1. A device for operating a valve (2) with rotary sealing member having a control stem (1) actuated by a rotary drive stem (3) disposed as a continuation of said control stem (1) and connected firmly therewith by a connection system (6), characterised in that:
1) said connection system (6) comprises a hollow chamber (7) independent of one at least of said stems (1, 3), said chamber being provided with two lines (15, 16) and containing a mobile member (18) capable of moving between, on the one hand, an initial position in which it is integral both with said control stem (1) and said drive stem (3) and where it constitutes a tight barrier between the two lines (15, 16) and, on the other hand, an end position in which said mobile member (18) remains integral with at most only one of the stems (1, 3) and where it opens a communication between the two lines (15, 16),
2) a fluid source (24) is connected to one of said lines (15),
3) the other line (16) is connected to a piston (27) capable of actuating the control stem (1) of said valve (2).

2. A device according to claim 1, characterised in that the movement of said mobile member (18) is obtained by a pyrotechnic cartridge, or a pyrotechnic retractor.

3. A device according to claim 1, characterised in that the line (15) connected to the fluid source (24) is arranged in such a way that the movement of said mobile member (18) is obtained by said fluid.

4. A device according to claim 1, characterised in that said fluid is a pressurised gas.

5. A device according to claim 4, characterised in that said gas source (24) is a tank equipped with a cock (28).

6. A device according to claim 4, characterised in that said gas source (24) is a pyrotechnic gas generator equipped with a trigger.

7. A device according to claim 3, characterised in that said chamber (7) is fixed to the control stem (1) of the valve (2) and in that said piston (27) acts on the control stem (1) of the valve (2) through the intermediary of a rack (30) which meshes with a toothed segment (31) carried by said hollow chamber (7).

8. A device according to claim 7, characterised in that said hollow chamber (7) comprises a blind cylindrical receptacle (9) and ends in non-abutting circular ring elements (10).

9. A device according to claim 8, characterised in that said drive stem (3) ends in a blind cylindrical receptacle (12) and non-abutting circular ring elements (14) extending the elements (10) carried by said chamber (7).

10. A device according to claim 9, characterised in that said mobile member (18) comprises a lower cylindrical portion (19) capable of sliding in the blind receptacle (9) carried by said chamber (7), a median portion consisting of arms (21) capable of fitting between the circular ring elements (10) carried by said chamber (7) and the circular ring elements (14) carried by the drive stem (3), and an upper cylindrical portion (22) capable of sliding in the blind receptacle (12) carried by the drive stem (3).
